# EUROPEAN PATENT SPECIFICATION

(11) **EP 1 455 420 B1**
(45) Date of publication and mention of the grant of the patent: **10.05.2006**
(21) Application number: 03023586.5
(22) Date of filing: 16.10.2003
(51) Int. Cl.: H01R 13/627, H01R 27/00, F16L 37/091

(54) **Electrical connector with a locking ring, especially a coaxial plug**
Elektrischer Verbinder mit Verriegelungsring, insbesondere ein Koaxialstecker
Connecteur électrique avec bague de blocage, plus particulièrement un connecteur coaxial

(30) Priority: 22.10.2002 EP 02023505
(43) Date of publication of application: 08.09.2004
(73) Proprietor: Tyco Electronics Belgium EC N.V., 8020 Oostkamp (BE)
(72) Inventor: Mattheeuws, Kristof, 9910 Knesselare (BE); Leeman, Reginald, 9910 Oostende (BE)
(74) Representative: Patentanwaltskanzlei WILHELM & BECK

(56) References cited:
- DE-C- 19 749 130
- FR-A- 2 810 087
- US-A1- 2002 158 466

## Description

The invention relates to an electrical connector with a first connector member that is mated with a second connector member and secured thereto with a locking ring.

FR 2810087 describes a mechanical connection between a cylindrical body and a female thread of a second body. On the outside, the cylindrical body comprises a ring with latching fingers, the latching fingers having different lengths. The latching fingers are flexible and are bent backwards to the cylindrical body by introducing the cylindrical body into the female thread of the second body. The latching fingers lock the cylindrical body into the second body. In case the cylindrical body is separated from the second body, the cylindrical body has to be rotated to screw out the cylindrical body from the thread of the second body. The first and second body are i.e. a thread and a female thread or a thread dowel with a bolt.

Axially mating electrical connectors include a first connector member that is mated with a second connector member. The first connector member has an axial bore and a first contact. The second connector member has a second contact and a cylindrical body that is received in the axial bore. The first and second contacts are electrically connected when the first connector member and the second connector member are mated. Either the cylindrical body or the axial bore includes a groove. A locking ring is arranged between the cylindrical body and the axial bore. The locking ring has latching fingers that engage with the groove so that the first and second connector members are prevented from disengaging. One example of such an axially mating electrical connector with a locking ring according to the preamble of claims 1, 7 and 12 is disclosed in DE 197 49 130.

In order to ensure that the locking ring locks the first connector member to the second connector member, the fingers have to be a specific length and have to be positioned at a specific angle. Specifically, to guarantee an axial locking with a very small clearance, it is necessary that a diameter of the axial bore and a diameter of the cylindrical body and the length and the angle of the fingers are within a small range of values. This causes high production costs.

It is an object of the invention is to provide an electrical connector that reduces an axial movement of a first and second connector member, even in a case of high production tolerances.

This and other objects are achieved by an electrical connector having a first connector member, a second connector member, and a locking ring. The first connector member has a first contact. The second connector member has an annualar groove and a second contact for electrical connection with the first contact. The locking ring is disposed on the first connector member. The locking ring has latching fingers that engage the annular groove when the first connector member and the second connector member are mated to lock the first connector member to the second connector member. The latching fingers are of at least a first type and a second type. The first type has a different length than the second type.

This and other objects are further achieved by an electrical connector having a first connector member, a second connector member, and a locking ring. The first connector member has a first contact. The second connector member has an annular groove and a second contact for electrical connection with the first contact. The locking ring is disposed on the first connector member. The locking ring has latching fingers that engage the annular groove when the first connector member and the second connector member are mated to lock the first connector member to the second connector member. The latching fingers are of at least a first type and a second type. The first type is formed at a different angle with respect to a plane of the locking ring than the second type.

This and other objects are still further achieved by an electrical connector having a first connector member, a second connector member, and a locking ring. The first connector member has a first contact and an abutment surface. The second connector member has a second contact for electrical connection with the first contact and an annular groove. The locking ring is disposed on the first connector member and has latching fingers. The latching fingers are of at least a first type and a second type. The first type has a different length than the second type so that the first type engages the annular groove when the abutment surface is a first distance from the groove and the second type engages the groove when the abutment surface is a second distance from the groove when the first and second connector members are mated to lock the first connector member to the second connector member.

The invention will now be described in greater detail with reference to the figures, in which:
Fig. 1 is a partial longitudinal sectional view of a connector system according to the invention showing first and second connector members in a mated position;
Fig. 2 is a sectional view of the first connector member;
Fig. 3 is an enlarged sectional view of an inner sleeve and latching fingers;
Fig. 4 is a sectional view of an unlocking sleeve of the first connector member;
Fig. 5 is a partial longitudinal sectional view of the second connector member;
Fig. 6 is a perspective view of a locking ring;
Fig. 7 is a top view of the locking ring of Fig. 6;
Fig. 8 is a sectional view of the locking ring of Fig. 6;
Fig. 9 is a schematic diagram of a mated position of the first and second connector members showing a first distance between a groove and an abutment surface;
Fig. 10 is a schematic diagram of a mated position of the first and second connector members showing a second distance between a groove and an abutment surface; and
Fig. 11 is schematic diagram of mated of the first and second connector members showing a third distance between a groove and an abutment surface.

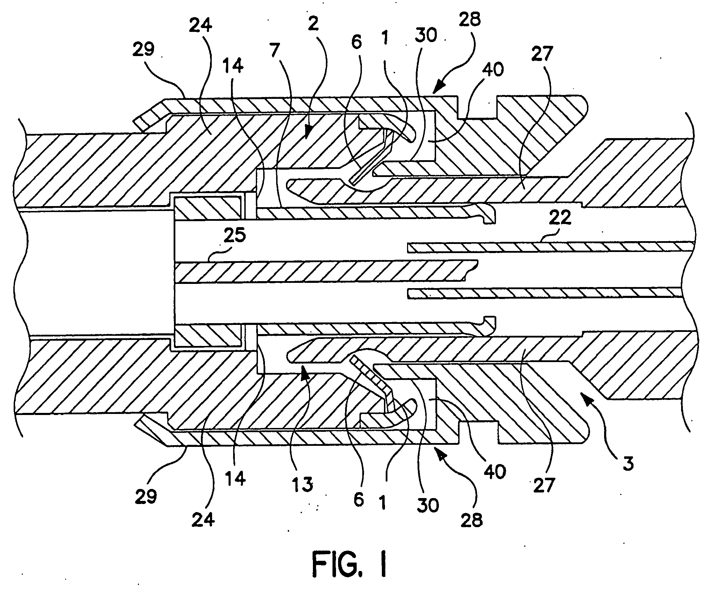

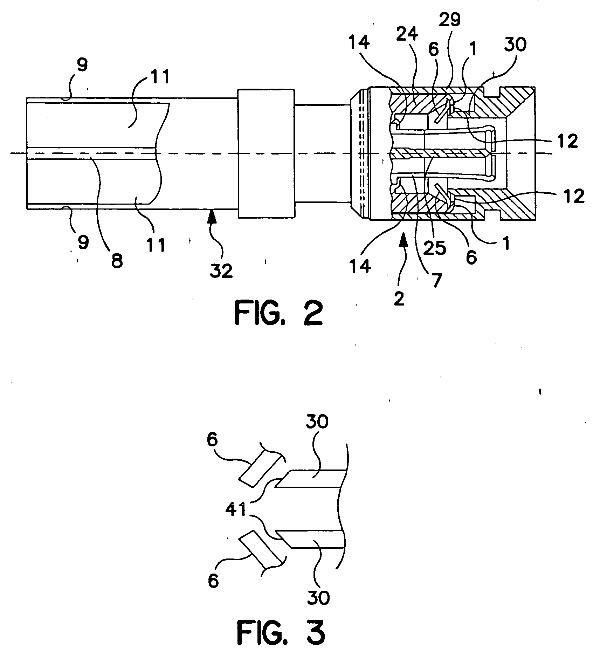

Fig. 1 shows a connector system with a first connector member 2, a second connector member 3, and a locking ring 1. As shown in Figs. 1 and 2, the first connector member 2 has a sleeve body 24. The sleeve body 24 has an opening 13 arranged with a first sleeve 7. The first sleeve 7 has a circular cross-section. A contacting pin 25 is arranged in a center of the first sleeve 7. The first sleeve 7 and the contacting pin 25 are electrically isolated and can be used for conducting different potentials. For example, the first sleeve 7 may be used as a shielding for signals of the contacting pin 25. The sleeve body 24 includes a stop sleeve made of metal that has a bent rim 12 at a front end thereof. The bent rim 12 is bent on an inside in a direction of the first sleeve 7. The locking ring 1 is arranged between a front end of the sleeve body 24 and the bent rim 12. The distance between the front end of the sleeve body 24 and the rim 12 may be greater than a height of the locking ring 1 to provide some clearance for the locking ring 1 in an axial direction. The first connector member 2 has an abutment surface 14. The abutment surface 14 may be, for example, a rim of a stop sleeve, a bended rim of a stop sleeve, or a rim of a spring that is fixed to the sleeve body 24.

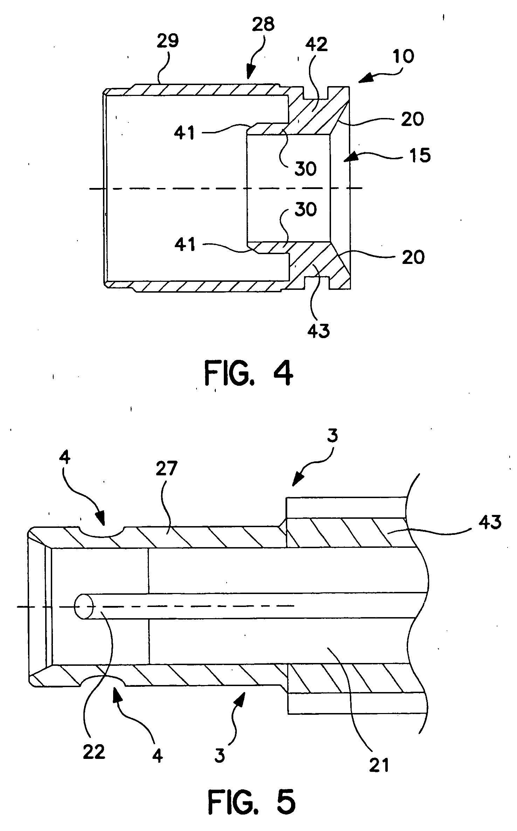

As shown in Fig. 1, an unlocking member 28 surrounds the sleeve body 24 and is formed to slide along a longitudinal axis of the sleeve body 24. As shown in Fig. 4, the unlocking member 28 has an outer sleeve 29 and an inner sleeve 30 arranged parallel to the outer sleeve 29. The inner sleeve 30 has a central opening 15 and an annular flange 41 that is inclined from an outer side to an inner side in a direction of latching fingers 6 arranged on the locking ring 1. The annular flange 41 is formed to support latching fingers 6 on the locking ring 1 that are being pushed outwards when the outer sleeve 29 is moved on the sleeve body 24. The inner and the outer sleeves 30, 29 are connected by a ring part 42 arranged at a front of the unlocking member 28. The ring part 42 includes a conical flange 20 at a front side that is inclined towards the central opening 15. The inner sleeve 30 has a cylindrical opening for receiving a second sleeve 27 of the second connector member 3, when the second connector member 3 is mated with the first connector member 2. The inner sleeve 30 has a diameter smaller than a diameter of the locking ring 1 but greater than a distance between two opposite latching fingers 6. The inner sleeve 30 is arranged in a mated position in front of the latching fingers 6. An annular receiving chamber 40 is positioned between the inner and outer sleeves 30, 29 and is open in a direction of the sleeve body 24. The receiving chamber 40 receives a front part of the sleeve body 24.

As shown in Fig. 5, the second sleeve 27 of the second connector member 3 is electrically isolated from a contacting sleeve 22. The second sleeve 27 is formed such that when the first sleeve 7 is inserted into the second sleeve 27, the first sleeve 7 is electrically connected with the second sleeve 27, and an ending of the second sleeve 27 is positioned adjacent to the abutment surface 14 of the first connector member 2. A second annular insulator 21 surrounds the contacting sleeve 22. A second outer conductor 43 that is electrically connected with the second sleeve 27 surrounds the second annular insulator 21. Arranged at a predetermined distance from a front end of the second sleeve 27 and on an outer surface of the second sleeve 27 is an annular groove 4.

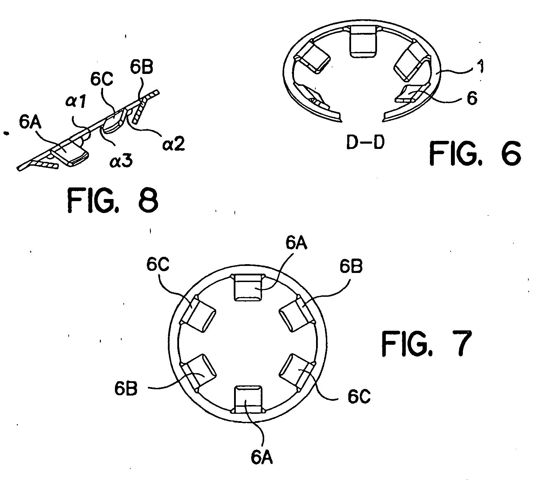

As shown in Figs. 6-8, the locking ring 1 has a plurality of the latching fingers 6 arranged on an inner side of the locking ring 1 and directed toward a lower side of a plane of the locking ring. As shown in Fig. 7, the locking ring 1 is provided with first, second and third types 6A, 6B, 6C, respectively, of latching fingers 6. Each of the types 6A, 6B, 6C has latching fingers 6 with a different length. The first type 6A of latching fingers 6 are of the greatest length, the second type 6B of latching fingers 6 are of a middle length, and the third type 6C of latching fingers 6 are of the smallest length. As shown in Fig. 6, two fingers of the same type are preferably arranged at opposite sides of the locking ring 1. The invention, however, is not limited to the three types 6A, 6B, 6C of latching fingers 6. The locking ring 1 may be provided with more types or fewer types of the latching fingers 6. The difference in the length between the first, second, and third types 6A, 6B, 6C of latching fingers 6 is greater than the different lengths that occur due to production variances in latching fingers of the same type where the range of the length only varies up to three percent of the length.

The first, second, and third types 6A, 6B, 6C of latching fingers 6 are arranged at different angles with respect to the plane. The first type 6A of latching fingers 6 is inclined at a first angle α1, the second type 6B of latching fingers 6 is inclined at a second angle α2, and the third type of latching fingers 6 is inclined at a third angle α3 compared to the plane of the ring 1. The first angle α1 is greater than the second angle α2 and the second angle α2 is greater than the third angle α3. Alternatively in a simple embodiment all of the latching fingers 6 could be arranged at the same angle.

As shown in Fig. 2, the first connector member 2 is connected to a cable 32. The cable 32 includes a central conductor 8 that is connected with the contacting pin 25. An annular dielectric insulator 11 surrounds the central conductor 8. An outer conductor 9 surrounds the dielectric insulator 11. The outer conductor 9 is electrically connected with the first sleeve 7. In the illustrated embodiment, the first connector member 2 is a coaxial connector plug and the second connector member 3 is a coaxial jack, however, the invention is not limited to this embodiments and may be adapted for use with other kinds of connector members.

The mating of the first connecting member 2 with the second connecting member 3 will now be described. The contacting pin 25 of the first connector member 2 is inserted into the contacting sleeve 22 of the second connector member 3 to electrically connect the contacting pin 25 and the contacting sleeve 22. The sleeve body 24 locks the locking ring 1, and the latching fingers 6 engage with the groove 4 when the first and second connecting members 2, 3 are mated. The latching fingers 6 hold the second connector member 3 and the second sleeve 27 against the abutment surface 14. If the second connector member 3 is attempted to be unmated from the first connector member 2, the groove 4 is pushed against the latching fingers 6, which are stiff, to retain the locking ring 1. The latching fingers 6 thereby prevent the second connector member 3 from being drawn-off the first connector member 2.

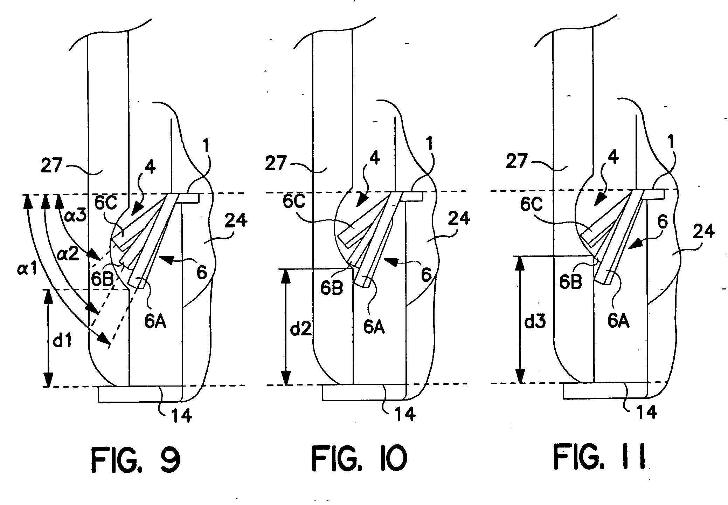

Figs. 9-11 show different embodiments of first and second connector members wherein in each embodiment the distance between the abutment surface 14 of the first connector member 2 and the groove 4 of the second connector member 3 varies due to high production ranges. Because the distance between the abutment surface 14 of the first connector member 2 and the groove 4 of the second connector member 3 varies, the distance between the groove 4 and the locking ring 1 also varies. To compensate for these different distances, the locking ring 1 is provided with different types of the latching fingers 6 to ensure the second connector member 3 is held against the first connector member 2. As a result, the impedance of the connection between the first and second connector members 2, 3 is the same, although the position of the groove 4 varies.

As shown in Fig. 9, the groove 4 is arranged at a first distance d1 from the abutment surface 14 causing the distance between the groove 4 and the ring 1 to be large. In this embodiment the first type 6A of latching fingers 6, which have the greatest length, are engaged with the groove 4 and hold the second sleeve 27 against the abutment surface 14. Additionally, the second and third types 6B, 6C of the latching fingers 6 are engaged with the groove 4 and help to hold the second sleeve 27 against the abutment surface 14.

As shown in Fig. 10, the groove 4 is arranged at a second distance d2 from the abutment surface 14. The second distance d2 is greater than the first distance d1 in Fig. 9. As a result, the distance between the groove 4 and the locking ring 1 is smaller than in Fig. 9. In this embodiment the second and third types 6B, 6C of the latching fingers 6 are engaged with the groove 4 and hold the second sleeve 27 against the abutment surface 14.

As shown in Fig. 11, the groove 4 is arranged at a third distance d1 from the abutment surface 14. The third distance d3 is greater than the second distance d2 shown in Fig. 10. As a result, the distance between the groove 4 and the locking ring 1 is small. In this embodiment only the third type 6c of latching fingers 6 engage with the groove 4 to hold the second sleeve 27 against the abutment surface 14.

To attain a locking function with little clearance in the axial direction the first, second, and third types 6a, 6b, 6c of latching fingers 6 should be inclined with the third angle α3, as shown in Fig. 9 for the third type 6C of the latching fingers 6. To further improve the holding function, first, second, and third types 6a, 6b, 6c of latching fingers 6 should be provided at different angles α1, α2, α3, and the angles should increase with the length of the latching fingers 6. Additionally, the different angles α1, α2, α3 reduce the force needed for mating the first and second connector members 2, 3. '

The second connector member 3 is held at an axial position in relation to the first connector member 2 so that impedance of the electrical connection between the first and the second connector members 2, 3 is optimal. The axial position of the first connector member 2 relative to the second connector member 3 is important, because the electrical impedance of the connection of the first and second connector members 2,3 depends on their axial position to each other. The first and the second connector members 2, 3 are designed to have the best impedance if the second connector member 3, especially the second sleeve 27 is adjacent to the abutment surface 14 of the first connector member 2.

To unlock the connection between the second connector member 3 and the first connector member 2, the unlocking member 28 is pushed in the direction of the sleeve body 24. By pushing the unlocking member 28 toward the sleeve body 24, a front part of the sleeve body 24 is received in the receiving chamber 40. As a result of this movement, the inner sleeve 30 pushes the latching fingers 6 outwards and out of the annular groove 4 to release the second sleeve 27 for axial movement. The second sleeve 27 can then be drawn out of the sleeve body 24 to disengage the first and second connector members 2, 3.

As shown in Figs. 9-11, when the latching fingers 6 are provided with different lengths 6A, 6B, 6C, the first and second connector members 2, 3 may be locked ,in a predetermined axial position to each other although the body and/or the bore and/or the groove 4 differ from optimal size or position, because the deviation of the optimal size or the optimal position of the groove 4 will be compensated for by the different lengths 6A, 6B, 6C of the latching fingers 6. In a preferred embodiment of the invention the latching fingers 6 with different lengths 6A, 6B, 6C are inclined towards the plane of the locking ring 1 at different angles so that the different lengths 6A, 6B, 6C of the latching fingers 6 can be more effectively lock the body. Additionally, in this embodiment, the latching fingers 6 can lock first and second connector members 2,3 that have a small axial clearance in a large range of distances between the groove 4 and the abutment surface 14 even though the diameter of the second sleeve 27 and/or the diameter of the locking ring 1 vary by a greater range of values.

When the latching fingers 6 of the same length are , arranged at opposite sides of the locking ring 1, the body is held against axial movement by the latching fingers 6. Because the second member 3 is thereby always held against the abutment surface 14, the axial position of the first and second connector members 2, 3 is always the same so that the mated connector members 2, 3 exhibit the same electrical properties. This is particularly advantageous in coaxial connectors wherein this position provides preferred electrical properties especially for the behavior of high frequency signals.

In a further preferred embodiment of the electrical connector the latching fingers 6 include a third type 6A, 6B, 6C, the third type 6A, 6B, 6C has a shorter length and a smaller angle α1, α2, α3 than the second type 6A, 6B, 6C.

In a preferred embodiment of the electrical connector the length of the first type 6A, 6B, 6C of the latching fingers and the length of the second type 6A, 6B, 6C of the latching fingers vary by more than three percent of the length.

The electrical connector comprises latching fingers 6 that are positioned around an annular surface of the locking member, the first type 6A, 6B, 6C of the latching fingers 6 are arranged directly across from each other on the annular surface and the second type 6A, 6B, 6C of the latching fingers 6are arranged directly across from each other on the annular surface. ,

The electrical connector preferably comprises latching fingers 6 that are positioned around an annular surface of the locking member 1, the first type 6A, 6B, 6C of the latching fingers 6 are arranged directly across from each other on the annular surface and the second type 6A, 6B, 6C of the latching fingers 6 are arranged directly across from each other on the annular surface.

The latching members 6 of the electrical connector preferably include a third type 6A, 6B, 6C, the third type 6A, 6B, 6C has a shorter length and a smaller angle α1, α2, α3 than the second type 6A, 6B, 6C and engages the groove 4 when the abutment surface 14 is a third distance from the groove 4.

The electrical connector preferably comprises an unlocking member 28 that is formed to slide adjacent to a surface of the first connector member 2 and is formed to engage the latching members 6 to release the latching members 6 from the groove 4.

## Claims

1. An electrical connector, comprising a first connector member (2) having a first contact (25), a second connector member (3) having an annular groove (4) and a second contact (22) for electrical connection with the first contact (25), and a locking ring (1),
the locking ring (1) is disposed on the first connector member (2), the locking ring (1) has latching fingers (6) that engage the annular grove (4) when the first connector member (2) and the second connector member (3) are mated to lock the first connector member (2) to the second connector member (3), **characterized in that** the latching fingers (6) are of at least a first type (6A, 6B, 6C) and a second type (6A, 6B, 6C), the first type (6A, 6B, 6C) having a different length than the second type (6A, 6B, 6C).

2. The electrical connector according to claim 1, **characterized in that** the first type (6A, 6B, 6C) is formed at a different angle (α1, α2, α3) with respect to a plane of the locking ring (1) than the second type (6A, 6B, 6C).

3. The electrical connector according to claims 1 or 2, **characterized in that** the second type (6A, 6B, 6C) has a shorter length and a smaller angle (α1, α2, α3) than the first type (6A, 6B, 6C).

4. The electrical connector according to any one of claims 1 to 3, **characterized in that** the latching fingers (6) extend from an inner side of the locking ring (1) toward the second contact (22) and in a direction into which the second contact (22) is moved by connecting the first and second contact (25, 22).

5. The electrical connector according to any one of claims 1 to 4, **characterized in that** the first connector member (2) includes an abutment surface (14) and the latching fingers (6) hold the second connector member (3) against the abutment surface (14).

6. The electrical connector according to any one of claims 1 to 5, **characterized in that** an unlocking member (28) is formed to slide adjacent to a surface of the first connector member (2) and is formed to engage the latching members (6) to release the latching members (6) from the groove (4).

7. An electrical connector, comprising a first connector member (2) having a first contact (25), a second connector member (3) having an annular groove (4) and a second contact (22) for electrical connection with the first contact (25), and a locking ring (1),
the locking ring (1) is disposed on the first connector member (2), the locking ring (1) having latching fingers (6) that engage the annular groove (4) when the first connector member (2) and the second connector member (3) are mated to lock the first connector member (2) to the second connector member (3), **characterized in that** the latching fingers (6) are of at least a first type (6A, 6B, 6C) and a second type (6A, 6B, 6C), the first type (6A, 6B, 6C) being formed at a different angle (α1, α2, α3) with respect to a plane of the locking ring (1) than the second type (6A, 6B, 6C).

8. The electrical connector according to claim 7, **characterized in that** the latching fingers (6) include a third type (6A, 6B, 6C), the third type (6A, 6B, 6C) being formed a smaller angle (α1, α2, α3) than the second type (6A, 6B, 6C) and the second type (6A, 6B, 6C) being formed at a smaller angle (α1, α2, α3) than the first type (6A, 6B, 6C).

9. The electrical connector according to claim 7 or 8, **characterized in that** the latching fingers (6) extend from an inner side of the locking ring (1) toward the second contact (22) and in a direction into which the second contact (22) is moved by connecting the first and second contact (25, 22).

10. The electrical connector according to any one of claims 7 to 9, **characterized in that** the first connector member (2) includes an abutment surface (14) and the latching fingers (6) hold the second connector member (3) against the abutment surface (14).

11. The electrical connector according to any one of claims 7 to 10, **characterized in that** an unlocking member (28) is formed to slide adjacent to a surface of the first connector member (2) and is formed to engage the latching members (6) to release the latching members (6) from the groove (4).

12. An electrical connector, comprising a first connector member (2) having a first contact (25) and an abutment surface (14), a second connector member (3) having a second contact (22) for electrical connection with the first contact (25) and an annular groove (4), and a locking ring (1)
the locking ring (1) is disposed on the first connector member (2), the locking ring (1) having latching fingers (6), **characterized in that** the latching fingers (6) are of at least a first type (6A, 6B, 6C) and a second type (6A, 6B, 6C), the first type (6A, 6B, 6C) having a different length than the second type (6A, 6B, 6C) so that the first type (6A, 6B, 6C) engages the annular groove (4) when the abutment surface (14) is a first distance from the annular groove (4) and the second type (6A, 6B, 6C) engages the annular groove (4) when the abutment surface (14) is a second distance from the annular groove (4) when the first and second connector members (3) are mated to lock the first connector member (2) to the second connector member (3)

13. The electrical connector according to claim 12, **characterized in that** the first type (6A, 6B, 6C) is formed at a different angle (α1, α2, α3) with respect to a plane of the locking ring (1) than the second type (6A, 6B, 6C).

14. The electrical connector according to any one of claims 12 or 13, **characterized in that** the latching fingers (6) extend from an inner side of the locking ring (1) toward the second contact (22) and in a direction into which the second contact (22) is moved by connecting the first and second contact (25, 22).

## Patentansprüche

1. Elektrischer Steckverbinder, der ein erstes Verbinderelement (2) mit einem ersten Kontakt (25), ein zweites Verbinderelement (3) mit einer ringförmigen Rille (4) und einem zweiten Kontakt (22) für eine elektrische Verbindung mit dem ersten Kontakt (25) und einen Verriegelungsring (1) umfaßt,
wobei der Verriegelungsring (1) auf dem ersten Verbinderelement (2) angeordnet ist, wobei der Verriegelungsring (1) Einrastfinger (6) hat, welche die ringförmige Rille (4) in Eingriff nehmen, wenn das erste Verbinderelement (2) und das zweite Verbinderelement (3) zusammengepaßt werden, um das erste Verbinderelement (2) an dem zweiten Verbinderelement (3) zu verriegeln, **dadurch gekennzeichnet, daß** die Einrastfinger (6) wenigstens von einer ersten Art (6A, 6B, 6C) und einer zweiten Art (6A, 6B, 6C) sind, wobei die erste Art (6A, 6B, 6C) eine andere Länge hat als die zweite Art (6A, 6B, 6C).

2. Elektrischer Steckverbinder nach Anspruch 1, **dadurch gekennzeichnet, daß** die erste Art (6A, 6B, 6C) in einem anderen Winkel (α1, α2, α3) in Bezug auf eine Ebene des Verriegelungsrings (1) geformt ist als die zweite Art (6A, 6B, 6C).

3. Elektrischer Steckverbinder nach Anspruch 1 oder 2, **dadurch gekennzeichnet, daß** die zweite Art (6A, 6B, 6C) eine kürzere Länge und einen kleineren Winkel (α1, α2, α3) hat als die erste Art (6A, 6B, 6C).

4. Elektrischer Steckverbinder nach einem der Ansprüche 1 bis 3, **dadurch gekennzeichnet, daß** sich die Einrastfinger (6) von einer Innenseite des Verriegelungsrings (1) zu dem zweiten Kontakt (22) hin und in einer Richtung erstrecken, in die der zweite Kontakt (22) durch Verbinden des ersten und des zweiten Kontakts (25, 22) bewegt wird.

5. Elektrischer Steckverbinder nach einem der Ansprüche 1 bis 4, **dadurch gekennzeichnet, daß** das erste Verbinderelement (2) eine Prellfläche (14) einschließt und die Einrastfinger (6) das zweite Verbinderelement (3) gegen die Prellfläche (14) halten.

6. Elektrischer Steckverbinder nach einem der Ansprüche 1 bis 5, **dadurch gekennzeichnet, daß** ein Entriegelungselement (28) so geformt ist, daß es angrenzend an eine Fläche des ersten Verbinderelements (2) gleitet, und so geformt ist, daß es die Einrastelemente (6) in Eingriff nimmt, um die Einrastelemente (6) aus der Rille (4) zu lösen.

7. Elektrischer Steckverbinder, der ein erstes Verbinderelement (2) mit einem ersten Kontakt (25), ein zweites Verbinderelement (3) mit einer ringförmigen Rille (4) und einem zweiten Kontakt (22) für eine elektrische Verbindung mit dem ersten Kontakt (25) und einen Verriegelungsring (1) umfaßt,
wobei der Verriegelungsring (1) auf dem ersten Verbinderelement (2) angeordnet ist, wobei der Verriegelungsring (1) Einrastfinger (6) hat, welche die ringförmige Rille (4) in Eingriff nehmen, wenn das erste Verbinderelement (2) und das zweite Verbinderelement (3) zusammengepaßt werden, um das erste Verbinderelement (2) an dem zweiten Verbinderelement (3) zu verriegeln, **dadurch gekennzeichnet, daß** die Einrastfinger (6) wenigstens von einer ersten Art (6A, 6B, 6C) und einer zweiten Art (6A, 6B, 6C) sind, wobei die erste Art (6A, 6B, 6C) in einem anderem Winkel (α1, α2, α3) in Bezug auf eine Ebene des Verriegelungsrings (1) geformt ist als die zweite Art (6A, 6B, 6C).

8. Elektrischer Steckverbinder nach Anspruch 7, **dadurch gekennzeichnet, daß** die Einrastfinger (6) einer dritte Art (6A, 6B, 6C) einschließen, wobei die dritte Art (6A, 6B, 6C) in einem kleineren Winkel (α1, α2, α3) geformt ist als die zweite Art (6A, 6B, 6C) und die zweite Art (6A, 6B, 6C) in einem kleineren Winkel (α1, α2, α3) geformt ist als die erste Art (6A, 6B, 6C).

9. Elektrischer Steckverbinder nach Anspruch 7 oder 8, **dadurch gekennzeichnet, daß** sich die Einrastfinger (6) von einer Innenseite des Verriegelungsrings (1) zu dem zweiten Kontakt (22) hin und in einer Richtung erstrecken, in die der zweite Kontakt (22) durch Verbinden des ersten und des zweiten Kontakts (25, 22) bewegt wird.

10. Elektrischer Steckverbinder nach einem der Ansprüche 7 bis 9, **dadurch gekennzeichnet, daß** das erste Verbinderelement (2) eine Prellfläche (14) einschließt und die Einrastfinger (6) das zweite Verbinderelement (3) gegen die Prellfläche (14) halten.

11. Elektrischer Steckverbinder nach einem der Ansprüche 7 bis 10, **dadurch gekennzeichnet, daß** ein Entriegelungselement (28) so geformt ist, daß es angrenzend an eine Fläche des ersten Verbinderelements (2) gleitet, und so geformt ist, daß es die Einrastelemente (6) in Eingriff nimmt, um die Einrastelemente (6) aus der Rille (4) zu lösen.

12. Elektrischer Steckverbinder, der ein erstes Verbinderelement (2) mit einem ersten Kontakt (25) und einer Prellfläche (14), ein zweites Verbinderelement (3) mit einer ringförmigen Rille (4) und einem zweiten Kontakt (22) für eine elektrische Verbindung mit dem ersten Kontakt (25) und einen Verriegelungsring (1) umfaßt,
wobei der Verriegelungsring (1) auf dem ersten Verbinderelement (2) angeordnet ist, wobei der Vernegelungsring (1) Einrastfinger (6) hat, **dadurch gekennzeichnet, daß** die Einrastfinger (6) wenigstens von einer ersten Art (6A, 6B, 6C) und einer zweiten Art (6A, 6B, 6C) sind, wobei die erste Art (6A, 6B, 6C) eine andere Länge hat als die zweite Art (6A, 6B, 6C), so daß die erste Art (6A, 6B, 6C) die ringförmige Rille (4) in Eingriff nimmt, wenn sich die Prellfläche (14) in einer ersten Entfernung von der ringförmigen Rille (4) befindet, und die zweite Art (6A, 6B, 6C) die ringförmige Rille (4) in Eingriff nimmt, wenn sich die Prellfläche (14) in einer zweiten Entfernung von der ringförmigen Rille (4) befindet, wenn das erste und das zweite Verbinderelement (3) zusammengepaßt werden, um das erste Verbinderelement (2) an dem zweiten Verbinderelement (3) zu verriegeln.

13. Elektrischer Steckverbinder nach Anspruch 12, **dadurch gekennzeichnet, daß** die erste Art (6A, 6B, 6C) in einem anderen Winkel (α1, α2, α3) in Bezug auf eine Ebene des Verriegelungsrings (1) geformt ist als die zweite Art (6A, 6B, 6C).

14. Elektrischer Steckverbinder nach einem der Ansprüche 12 oder 13, **dadurch gekennzeichnet, daß** sich die Einrastfinger (6) von einer Innenseite des Verriegelungsrings (1) zu dem zweiten Kontakt (22) hin und in einer Richtung erstrecken, in die der zweite Kontakt (22) durch Verbinden des ersten und des zweiten Kontakts (25, 22) bewegt wird.

## Revendications

1. Connecteur électrique, comprenant un premier élément connecteur (2) comportant un premier contact (25), un deuxième élément connecteur (3) comportant une rainure annulaire (4) et un deuxième contact (22) destiné à être connecté électriquement avec le premier contact (25), et une bague de verrouillage (1),
la bague de verrouillage (1) étant agencée sur le premier élément connecteur (2), la bague de verrouillage (1) comportant des doigts de verrouillage (6) s'engageant dans la rainure annulaire (4) lorsque le premier élément connecteur (2) et le deuxième élément connecteur (3) sont accouplés pour verrouiller le premier élément connecteur (2) au deuxième élément connecteur (3), **caractérisé en ce que** les doigts de verrouillage (6) sont au moins d'un premier type (6A, 6B, 6C) et d'un deuxième type (6A, 6B, 6C), le premier type (6A, 6B, 6C) ayant une longueur différente de celle du deuxième type (6A, 6B, 6C).

2. Connecteur électrique selon la revendication 1, **caractérisé en ce que** le premier type (6A, 6B, 6C) est formé à un angle (α1, α2, α3) par rapport au plan de la bague de verrouillage (1) différent de celui du deuxième type (6A, 6B, 6C).

3. Connecteur électrique selon l'une des revendications 1 ou 2, **caractérisé en ce que** le deuxième type (6A, 6B, 6C) a une longueur plus courte que le premier type (6A, 6B, 6C) et un angle réduit (α1, α2, α3) par rapport à celui-ci.

4. Connecteur électrique selon l'une quelconque des revendications 1 à 3, **caractérisé en ce que** les doigts de verrouillage (6) s'étendent d'un côté interne de la bague de verrouillage (1) vers le deuxième contact (22) et dans une direction de déplacement du deuxième contact (22) par suite de la connexion des premier et deuxième contacts (25, 22).

5. Connecteur électrique selon l'une quelconque des revendications 1 à 4, **caractérisé en ce que** le premier élément connecteur (2) englobe une surface de butée (14), les doigts de verrouillage (6) retenant le deuxième élément connecteur (3) contre la surface de butée (14).

6. Connecteur électrique selon l'une quelconque des revendications 1 à 5, **caractérisé en ce qu'**un élément de déverrouillage (28) est destiné à glisser adjacent à une surface du premier élément connecteur (2) et à s'engager dans les éléments de verrouillage (6) pour dégager les éléments de verrouillage (6) de la rainure (4).

7. Connecteur électrique, comprenant un premier élément connecteur (2) comportant un premier contact (25), un deuxième élément connecteur (3) comportant une rainure annulaire (4) et un deuxième contact (22) destiné à être connecté électriquement avec le premier contact (25), et une bague de verrouillage (1),
la bague de verrouillage (1) étant agencée sur le premier élément connecteur (2), la bague de verrouillage (1) comportant des doigts de verrouillage (6) s'engageant dans la rainure annulaire (4) lorsque le premier élément connecteur (2) et le deuxième élément connecteur (3) sont accouplés pour verrouiller le premier élément connecteur (2) au deuxième élément connecteur (3), **caractérisé en ce que** les doigts de verrouillage (6) sont au moins d'un premier type (6A, 6B, 6C) et d'un deuxième type (6A, 6B, 6C), le premier type (6A, 6B, 6C) étant formé à un angle (α1, α2, α3) par rapport au plan de la bague de verrouillage (1) différent de celui du deuxième type (6A, 6B, 6C).

8. Connecteur électrique selon la revendication 7, **caractérisé en ce que** les doigts de verrouillage (6) englobent un troisième type (6A, 6B, 6C), le troisième type (6A, 6B, 6C) étant formé à un angle réduit (α1, α2, α3) par rapport au premier type (6A, 6B, 6C).

9. Connecteur électrique selon les revendications 7 ou 8, **caractérisé en ce que** les doigts de verrouillage (6) s'étendent d'un côté interne de la bague de verrouillage (1) vers le deuxième contact (22) et dans une direction de déplacement du deuxième contact (22) par suite de la connexion des premier et deuxième contacts (25, 22).

10. Connecteur électrique selon l'une quelconque des revendications 7 à 9, **caractérisé en ce que** le premier élément connecteur (2) englobe une surface de butée (14), les doigts de verrouillage (6) retenant le deuxième élément connecteur (3) contre la surface de butée (14).

11. Connecteur électrique selon l'une quelconque des revendications 7 à 10, **caractérisé en ce qu'**un élément de déverrouillage (28) est destiné à glisser adjacent à une surface du premier élément connecteur (2) et à s'engager dans les éléments de verrouillage (6) pour dégager les éléments de verrouillage (6) de la rainure (4).

12. Connecteur électrique, comprenant un premier élément connecteur (2) comportant un premier contact (25) et une surface de butée (14), un deuxième élément connecteur (3) comportant un deuxième contact en vue d'une connexion avec le premier contact (25), une rainure annulaire (4), et une bague de verrouillage (1),
la bague de verrouillage (1) étant agencée sur le premier élément connecteur (2), la bague de verrouillage (1) comportant des doigts de verrouillage (6), **caractérisé en ce que** les doigts de verrouillage (6) sont au moins d'un premier type (6A, 6B; 6C) et d'un deuxième type (6A, 6B, 6C), le premier type (6A, 6B, 6C) ayant une longueur différente de celle du deuxième type (6A, 6B, 6C), de sorte que le premier type (6A, 6B, 6C) s'engage dans la rainure annulaire (4) lorsque la surface de butée (14) se trouve à une première distance de la rainure annulaire (4), le deuxième type (6A, 6B, 6C) s'engageant dans la rainure annulaire (4) lorsque la surface de butée (14) se trouve à une deuxième distance de la rainure annulaire (4), lors de l'accouplement des premier et deuxième éléments connecteurs (3), pour verrouiller le premier élément connecteur (2) sur le deuxième élément connecteur (3).

13. Connecteur électrique selon la revendication 12, **caractérisé en ce que** le premier type (6A, 6B, 6C) est formé à un angle (α1, α2, α3) par rapport au plan de la bague de verrouillage (1) différent de celui du deuxième type (6A, 6B, 6C).

14. Connecteur électrique selon l'une quelconque des revendications 12 ou 13, **caractérisé en ce que** les doigts de verrouillage (6) s'étendent d'un côté interne de la bague de verrouillage (1) vers le deuxième contact (22) et dans une direction de déplacement du deuxième contact (22) par suite de la connexion des premier et deuxième contacts (25, 22).
